Europäisches Patentamt

European Patent Office

Office européen des brevets

(11) Veröffentlichungsnummer: **0 243 897**
**A2**

(12) **EUROPÄISCHE PATENTANMELDUNG**

(21) Anmeldenummer: **87106019.0**

(22) Anmeldetag: **24.04.87**

(51) Int. Cl.⁴: **G01N 35/06**

(30) Priorität: **02.05.86 DE 3614955**

(43) Veröffentlichungstag der Anmeldung:
**04.11.87 Patentblatt 87/45**

(84) Benannte Vertragsstaaten:
**CH ES FR GB IT LI SE**

(71) Anmelder: **Schulz, Peter, Dr. med.**
**Gartenstrasse 15**
**D-7140 Ludwigsburg(DE)**

(72) Erfinder: **Schulz, Peter, Dr. med.**
**Gartenstrasse 15**
**D-7140 Ludwigsburg(DE)**

(74) Vertreter: **Vogel, Georg**
**Hermann-Essig-Strasse 35**
**D-7141 Schwieberdingen(DE)**

(54) **Proben-Verteiler-System.**

(57) Die Erfindung betrifft ein Proben-Verteiler-System zum mittels Manipulatoren, die Horizontal-und Vertikalbewegungen ausübende Pipettennadeln tragen, fernbetätigten Entnehmen bestimmter Flüssigkeitsmengen aus Primär-Behältern und Eingeben dieser in Sekundär-Behälter. Das System weist einen vorzugsweise um eine vertikale Achse drehbaren Tisch auf, um dessen Drehbewegungen ausübende Umfangsseite herum die zu Behälter-Sätzen zusammengefaßten und außerhalb des Tisches angeordneten Sekundär-Behälter verteilt sind. Ferner ist eine Waschanlage für die Pipettennadeln und einer zentralen Steuerungseinheit vorgesehen. Die Manipulatoren sind vom Tisch getragen und um die Achse herum verteilt, während die Primär-Behälter zu einem Behälter-Satz zusammengefaßt und ·außerhalb des Tisches angeordnet sind. Die Waschstation ist in Drehrichtung des Tisches betrachtet zwischen dem letzten Sekundär-Behälter und dem Primär-Behälter-Satz angeordnet.

FIG.1

## Proben-Verteiler-System

Die Erfindung betrifft ein Proben-Verteiler-System zum mittels Manipulatoren, die Horizontal-und Vertikalbewegungen ausübende Pipettennadeln tragen, fernbetätigten Entnehmen bestimmter Flüssigkeitsmengen aus Primär-Behältern und Eingeben dieser in Sekundär-Behälter mit einem vorzugsweise um eine vertikale Achse drehbaren Tisch, um dessen Drehbewegungen ausübende Umfangsseite herum die zu Behälter-Sätzen zusammengefaßten und außerhalb des Tisches angeordneten Sekundär-Behälter verteilt sind, einer Waschanlage für die Pipettennadeln und einer zentralen Steuerungseinheit.

Systeme der eingangs genannten Art werden vorwiegend in medizinischen Labors eingesetzt. Dort werden die Proben in Abteilungen verteilt. Der mechanisierte Proben-Verteiler wird sinnvoll nur bei der Primär-Verteilung von Serum, Plasma, Liquor und Urin in die verschiedenen Labor-Abteilungen und bei der Sekundär-Verteilung von großen Untersuchungs-Serien eingesetzt.

Bei bekannten Systemen der eingangs genannten Art, wie sie beispielsweise in der DE-OS 30 16 294 beschrieben und dargestellt sind, werden zum Verteilen von flüssigem Untersuchungsmaterial zu Analysezwecken Geräte eingesetzt, bei denen das in Reihe von entsprechend bezeichneten Einzel-Entnahmegefäßen gesammelte Untersuchungsmaterial unter Überwachung und Steuerung durch einen die Arbeitsanweisung enthaltenen Rechner auf einem bewegbaren Träger - schrittweise an einer Abfüllstelle mit automatischen Pipettierungsvorrichtungen vorbeiführbar ist. An ihnen sind die zu untersuchenden Proben in Reihen von Analysen-Gefäßen abfüllbar. An dem bewegbaren Träger für die Entnahmegefäße sind mehr als eine Abfüllstelle angeordnet, an der bei ein und demselben Vorgang einer Reihe von Entnahmegefäßen an automatischen Pipettiervorrichtungen das Abfüllen der Proben in verschiedene, an der jeweiligen Abfüllstelle angeordnete Reihen gleichartiger oder verschiedenartiger Analysen-Gefäße, wie Ketten, RACKS, Teller oder Ringe ausführbar ist. Im bekannten Falle sind daher die Primär-Behälter auf dem Drehbewegungen ausübenden Tisch angeordnet, während die Sekundär-Behälter außerhalb des Tisches angeordnet sind. Auf diese Weise können die Proben zwar problemlos verteilt werden, allerdings befinden sich die Sekundär-Behälter mit Proben, die für die gleichen Untersuchungen vorgesehen sind, an verschiedenen Stellen, so daß diese Behälter vor der Untersuchung zunächst zu einem Behälter-Satz zusammengefaßt werden müssen, um die Untersuchung durchführen zu können. Das Einsammeln und Zusammenfassen der Sekundär-Behälter ist nicht nur umständlich, sondern auch mit dem Nachteil behaftet, daß es zu ungewollten Verwechslungen einzelner Abteilungen kommen kann. Die Wahrscheinlichkeit, daß es zur Verwechslung der Sekundär-Behälter kommt, ist aber erfahrungsgemäß nicht gering.

Im übrigen ist das bekannte Gerät auch mit dem Nachteil behaftet, daß die Bewegungen der Abfüllstellen und der Pipettennadeln nicht optimalisiert sind.

Der Erfindung liegt die Aufgabe zugrunde, das gattungsgemäße System konstruktiv mit dem Ziel zu vereinfachen, daß die für gleichartige Untersuchungen vorgesehenen Sekundär-Behälter zu einem gemeinsamen Behälter-Satz zusammengefaßt sind. Ein weiteres Ziel ist es, die Bewegungen der Nadeln mit Bezug auf die Sekundär-Behälter sowie die Anzahl der Waschanlagen zu minimieren.

Die gestellte Aufgabe wird erfindungsgemäß dadurch gelöst, daß die Manipulatoren vom Tisch getragen und um die Achse herum verteilt sind, daß die Primär-Behälter zu einem Behälter-Satz zusammengefaßt und außerhalb des Tisches angeordnet sind und daß die Waschstation in Drehrichtung des Tisches betrachtet zwischen dem letzten Sekundär-Behälter und dem Primär-Behälter-Satz angeordnet ist.

Der wesentliche Gedanke der Erfindung besteht daher darin, daß nicht nur die Primär-Behälter, sondern auch die Sekundär-Behälter innerhalb des Systems zentral angeordnet sind, wobei die Sekundär-Behälter nach Untersuchungsarten zusammengefaßt sind. Dies bringt vor allem den Vorteil, daß eine Zusammenfassung der Sekundär-Behälter, bei denen die gleiche Untersuchung erfolgen soll, nicht mehr erforderlich ist, da nach der Beendigung der Verteilung die Behälter-Sätze nach der Untersuchungsart bereits unterteilt sind. Es kann daher zu einer fehlerhaften Zusammenfassung einzelner Behälter nicht mehr kommen. Bei der Erfindung können die Pipettennadeln zum einen kreisrunde Bewegungen um die Achse herum und zum anderen tangentiale Bewegungen zu diesen kreisrunden Bewegungen ausüben. Darüber hinaus können die Pipettennadeln auch vertikale Hin-und Herbewegungen ausüben, was auch die bekannten Pipettennadeln ausführen können. Hierdurch, vor allem durch die Kreisbewegung der Pipettennadeln ist es möglich, die Anzahl der Waschanlagen erheblich zu reduzieren; im Regelfall kommt das System mit einer Waschanlage für sämtliche Pipettennadeln aus.

Weitere vorteilhafte und zweckmäßige Maßnahmen der Erfindung gehen aus den Unteransprüchen hervor.

Dadurch, daß der Abstand der Manipulatoren von der Achse gleich groß ist und die Pipettenrohre in einer horizontalen Ebene lineare Hin-und Herbewegungen ausüben können, kann der Weg, den die eine Pipettennadel von dem Primär-Behälter zu den Sekundär-Behältern zurücklegt, weiter reduziert werden. Bei Probe-Verteiler-Systemen, deren Manipulatoren jeweils einen vertikal ausgerichteten Träger mit einem horizontal verlaufenden Ausleger aufweisen, wobei das freie Ende des Auslegers jeweils ein Pipettenrohr trägt, ist es daher zweckmäßig, wenn der Träger auf einer rechtwinklig zum Radius des Tisches verlaufenden Führung hin und her bewegbar ist, während der Ausleger auf dem Träger vertikal hin und her bewegbar ist.

Hierbei können die Maßnahmen auch so getroffen sein, daß die Behälter-Sätze in radialer Richtung des Tisches hin und her bewegbar sind. Bei den erfindungsgemäßen Proben-Verteiler-Systemen sind also die Manipulatoren gleichmäßig um die Achse verteilt, so daß schon während der - schrittweisen Verdrehung des Tisches um die Achse die Pipettennadeln und die Sekundär-Behälter-Sätze synchron bewegt werden können. Wird also der Tisch um einen Winkel verdreht, dann befinden sich die Pipettennadeln über den vorgesehenen Sekundär-Behältern, so daß die Pipettennadeln nur noch eine vertikale Abwärtsbewegung, die ebenfalls gesteuert ist, durchführen muß.

Wie bereits ausgeführt, sind die Pipettennadeln um die Achse herum gleichmäßig verteilt. Die Verteilung der Proben ist bei dem System erst dann beendet, wenn zum einen sämtliche Proben verteilt worden sind und zum anderen alle Pipettennadeln gewaschen sind und neu eingesetzt werden können.

Im einzelnen wird die Verteilung wie folgt durchgeführt:
Die Proben werden zunächst identifiziert und im Primär-Behälter-Satz angeordnet. Wird das Proben-Verteiler-System eingeschaltet, dann wird durch die mit dem Primär-Satz zusammenarbeitende Pipettennadel die erste Probe entnommen, danach wird der Tisch um seine Achse verdreht, und zwar um einen Winkel $\alpha = 360{:}n$, n = Anzahl der Pipettennadeln. Sollen nun bei der Probe $P_i$ nur die Untersuchungen $U_i$ und $U_j$, $1 \leq i = j \leq n$, n = Anzahl der Untersuchungen, durchgeführt werden, dann wird von der Probe $P_i$ nur auf den Stationen $U_i$ und $U_j$ pipettiert. Befindet sich die Pipettennadel mit der ersten Probe oberhalb eines Sekundär-Behälter-Satzes, dessen interne Codierung verschieden von i und j ist, dann erfolgt keine Pipettierung. Nach der Verteilung wird bzw. werden die Pipettennadel(n) in der Waschanlage für den nächsten Pipettiervorgang bereitgestellt. Hierbei ist es zweckmäßig, wenn das Pipettenrohr mit einem Schwingungsgeber zusammenarbeitet, der das Ende des Pipettenrohres in Schwingungen, deren Frequenz im Bereich der Ultraschall-Schwingungen liegen kann, versetzt.

Diese Art von Reinigung der Pipettennadeln ist nicht nur zeitsparend, sondern auch besonders effektiv, da auf diese Weise auch an sich keimfreie Reste der vorangegangenen Probe beseitigt werden können.

Um auch die vertikalen Hin-und Herbewegungen der Pipettennadel optimalisieren zu können, sieht eine weitere zweckmäßige Maßnahme der Erfindung vor, daß das Pipettenrohr mit einem Schwingungsgeber und einem Schwingungsnehmer zusammenarbeitet und daß die Steuerungseinheit einen Komparator besitzt, der die Soll-mit der Ist-Frequenz des Pipettenrohr-Endes vergleicht. Bekanntlich sind die Proben-Röhrchen genormt, so daß in der Steuerungseinheit nicht nur der Inhalt der Probe, sondern auch der Bewegungsablauf der Pipettennadel gespeichert und berechnet werden kann.

Um die Ausfallzeit des Proben-Verteiler-Systems reduzieren zu können, sieht eine weitere Maßnahme der Erfindung vor, daß jedes Pipettenrohr an jeweils einen Dilutor angeschlossen ist, wobei diese um die Achse des Tisches herum angeordnet sind und wobei zwischen der das Pipettenrohr mit dem Dilutor verbindenden Leitung und dem Dilutor ein Drucksensor angeordnet ist. Durch diesen Drucksensor können auf besonders einfache Weise Verstopfungen der Nadel festgestellt und signalisiert werden.

Ein Ausführungsbeispiel der Erfindung ist in der Zeichnung dargestellt und wird im folgenden näher beschrieben. Es zeigt:

Fig. 1 eine vertikale Draufsicht auf ein Proben-Verteiler-System, schematisch dargestellt, und

Fig. 2 ebenfalls in schematischer Darstellung eine Seitenansicht eines Manipulators mit einer Pipettennadel.

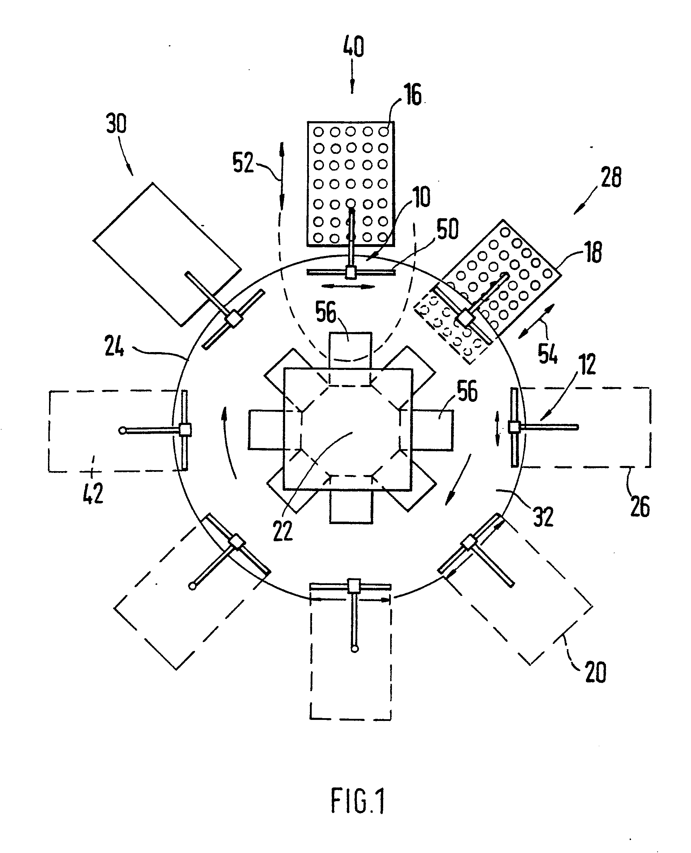

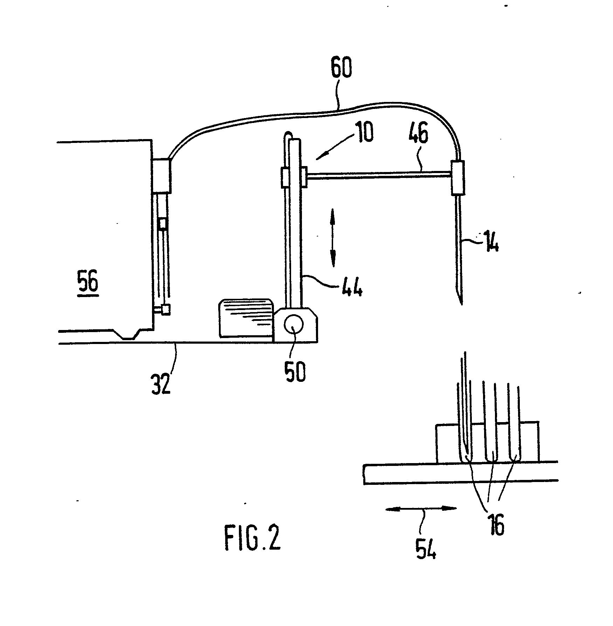

In den Fig. 1 und 2 ist ein Proben-Verteiler-System zum mittels Manipulatoren 10, 12, die Horizontal-und Vertikalbewegungen ausübende Pipettennadeln 14 (vgl. Fig. 2) tragen, fernbetätigten Entnehmen bestimmter Flüssigkeitsmengen aus Primär-Behältern 16 und Eingeben dieser in Sekundär-Behälter 18,20 dargestellt. Das System weist einen vorzugsweise um eine vertikale Achse 22 drehbaren Tisch 32 auf, um dessen Drehbewegungen ausübende Umfangsseite 24 herum die zu Behälter-Sätzen 26,28 zusammengefaßten und außerhalb des Tisches angeordneten Sekundär-Behälter verteilt sind. Das Proben-Verteiler-System weist ferner eine Waschanlage 30 für die Pipettennadeln 14 und eine nicht näher dargestellte zentrale Steuerungseinheit auf.

Die Manipulatoren 10 sind vom Tisch 32 getragen und um die Achse 22 herum verteilt. Die Primär-Behälter 16 sind zu einem Behälter-Satz 40 zusammengefaßt und außerhalb des Tisches 32 angeordnet. Die Waschstation 30 befindet sich in Drehrichtung des Tisches 32 betrachtet zwischen dem letzten Sekundär-Behälter-Satz 42 und dem Primär-BehälterSatz 40. Wie besonders Fig. 1 erkennen läßt, ist der Abstand der Manipulatoren 10 von der Achse 22 gleich groß, und die Pipettenrohre 14 können in einer horizontalen Ebene lineare Hin-und Herbewegungen ausüben. Die Manipulatoren 10 des Systems weisen jeweils einen vertikal ausgerichteten Träger 44 mit einem horizontal verlaufenden Ausleger 46 auf, wobei das freie Ende des Auslegers 46 jeweils ein Pipettenrohr 14 trägt. Hierbei kann sich der Träger 44 auf einer rechtwinklig zum Radius des Tisches 32 verlaufenden Führung 50 hin und her bewegen, während der Ausleger 46 auf dem Träger 44 vertikal hin und her bewegbar ist.

Die Behälter-Sätze 28, 40 sind in radialer Richtung des Tisches, wie die Doppelpfeile 52, 54 erkennen lassen, hin und her bewegbar. Die Pipettenrohre 14 sind an jeweils einem Dilutor 56 angeschlossen, wobei diese um die Achse 22 des Tisches 32 herum angeordnet sind. Dilutor ist ein mechanisches Gerät zur Aufnahme einer eingestellten Proben-Menge und Abgabe in ein Reaktionsröhrchen unter Zugabe einer Menge Reagenz aus einem Reservoir. Zum Beispiel wird 0,1 ml Probe aufgenommen und mit 1 ml Reagenz diluiert. Der Dilutor ist dazu mit zwei Spritzen ausgerüstet; die erste zieht die Probe auf; die zweite entnimmt Reagenz aus dem Reservoir. Die Probe wird im zweiten Schritt wieder durch die Pipettenspritze abgegeben und nach Umschaltung eines Ventils wird auch das Reagenz abgegeben. Da das Reagenz meistens in mehrfachem Überschuß zugeführt wird, ergibt sich hier ein guter Spüleffekt der Pipettenspritze. Bei dieser Ausbildung des Systems ist es zweckmäßig, wenn zwischen der das Pipettenrohr 14 mit dem Dilutor 56 verbindenden Leitung 60 ein nicht näher dargestellter Drucksensor angeordnet ist, der den jeweiligen Über-bzw. Unterdruck in der Leitung mißt. Wird der erwartete Druckwert um ein Mehrfaches überschritten, dann ist anzunehmen, daß die Pipettennadel z.B. mit Gerinnsel verstopft ist.

Das Pipettenrohr 14 kann ferner mit einem nicht näher dargestellten Schwingungsgeber und einem Schwingungsnehmer zusammenarbeiten, wobei der in der Steuereinheit angeordnete Komparator die Soll-mit der Ist-Frequenz des Pipettenrohr-Endes vergleicht. Damit kann vor allem auf einfache Weise festgestellt werden, ob das Pipettenrohr-Ende mit der Probe bereits in Verbindung steht. Ist diese Information - das Pipettenrohr-Ende ist mit der Probe in Berührung - der zentralen Steuerungseinheit zugeführt worden, dann kann der Rechner berechnen, wie tief das Pipettenrohr-Ende in die Probe einfahren muß, um die vorgesehene Menge der Probe zu entnehmen. Auf diese Weise kann die Benetzung des Pipettenrohres minimiert werden.

Die Verteilung der Proben wird wie folgt durchgeführt:

Die Identifizierung der Proben erfolgt grundsätzlich vor der Verteilung bzw. vor der Testdurchführung. Bei nicht codierten Proben (z.B. in der Laborarzt-Praxis) erfolgt die Vergabe einer fortlaufenden Labor-Nummer für Probe und Auftrag, die durch den Labor-Rechner eindeutig dem Proben-Röhrchen (und damit dem Patienten) zugeordnet werden kann. Bei der manuellen Bestückung der Probenhalter (RACKS) muß die sequentielle Reihenfolge entsprechend der Labor-Nummer eingehalten werden. Die Identifizierung erfolgt nur indirekt durch eine Lesung der RACK-Kennung und durch die jeweilige Positionsnummer. Bei maschinell lesbar codierbaren Proben (Barcode) kann die Lesung bei Bestückung der RACKS erfolgen. Die Reihenfolge bei der Bestückung ist hier wahlfrei: Die Auftragsnummer wird vom Barcode-Etikett auf dem Proben-Röhrchen gelesen und an den Labor-Rechner mit der RACK-und Positionsnummer übertragen; dieser vergibt evtl. noch eine Labor-Nummer (die aber hier im Prinzip nicht notwendig ist).

Notfall-Proben, d.h. eilige Untersuchungen müssen sofort durchgeführt werden, dazu ist die sofortige Einschleusung in den Probeverteiler nötig. Die Proben sind dann vom Proben-Verteiler-System an den Beginn der Serie in frei zu haltende Plätze zu pipettieren. Die Anzahl der freien Plätze für Notfall-Proben sollte vom Anwender frei definierbar sein.

Probe-Röhrchen (Primär-Seite) werden zunächst in spezielle RACKS aufgenommen. Das RACK hat eine maschinell lesbare Codierung zur Typenerkennung und eine fortlaufende Nummer. Eine Vielzahl dieser RACKS wird auf einem Tablett dem Proben-Verteiler-System angeboten. Für die Primär-Verteilung werden regelmäßig nur große Probe-Röhrchen verwendet. Hierbei soll der manuelle Zugriff auf einzelne Proben jederzeit möglich sein. Danach folgt, wie bereits beschrieben, die Identifizierung vor der Verteilung. Proben vom Vortag, bei denen einzelne Untersuchungen zu wiederholen sind, müssen nochmals verteilt werden. Diese Proben werden am Vortag anhand einer sogenannten Wiederholer-Liste in einem Tablett zusammengestellt und morgens sofort bei Tagesbeginn in dem Proben-Verteiler-System angeboten. Somit wird die Zeit vom Proben-Eingang bis zur ersten Verteilung (auspacken, identifizieren, erfassen) genutzt. Für die Sekundär-Verteilung werden die aus der Primär-Verteilung kommenden Röhrchen eingesetzt. Diese Röhrchen werden in RACKS auf Tabletts vorgegeben. Die Proben werden dann entsprechend der vom Labor-Rechner übertragenen Verteiler-Liste die erforderlichen Serien-Mengen in die Sekundär-Gefäße pipettiert. Die Verteilung erfolgt regelmäßig in Röhrchen mit einheitlicher Größe, die leicht zu handhaben sind. Die Verteilung erfolgt gewöhnlich in bis zu 6 Abteilungen simultan (1. Station enthält Primär-Röhrchen, die 8. Station ist die Waschstation). Die Messung der Material-Menge erfolgt während der Pipettierung, und zwar automatisch. Reicht die gemessene Serien-Menge nicht für alle Teste aus, so wird NICHT pipettiert, weil der Proben-Verteiler-System-Rechner nicht nach diagnostischen Regeln entscheiden kann, welcher Test dann durchgeführt wird. Da die Pipettennadeln mit Schwingungsgeber und Schwingungsnehmer ausgerüstet sind, erfolgt auch eine Steuerung der Eintauchtiefe, um die Benetzung der Entnahmenadel zu minimieren. In der 8. Station werden die Pipettennadeln gewaschen. Hier werden die Nadeln mit Wasser durchspült, während sie eine Folie durchstechen, um auch die Außenwand der Nadel zu reinigen. Die ordnungsgemäße Position der Pipettiernadel kann hierbei ebenfalls geprüft werden.

Bei der Verteilung der Proben auf die Untersuchungs-Serien wird entsprechend der vom Labor-Rechner übertragenen Arbeits-Liste die erforderliche Serien-Menge in die Test-Gefäße pipettiert. Die Proben werden auch dann verteilt, wenn der Test erst mehrere Tage später erfolgen soll. Die Verteilung erfolgt normalerweise in Original-Test-Röhrchen, und zwar bis zu 8 Untersuchungs-Serien simultan. Die aufgesaugten Proben werden, falls erforderlich, mit Reagenzien oder Wasser verdünnt (Dilutor-Funktion).

Man erkennt, daß die Erfindung jedenfalls dann verwirklicht ist, wenn die Proben-Verteilung mittels mehrerer Manipulatoren, die Kreisbewegungen ausüben können und Pipettennadeln tragen (die sowohl vertikale, als auch tangentiale Hin und Herbewegungen ausüben können) erfolgt. Zur Optimalisierung der Bewegung kann es zweckdienlich sein, wenn die zu Behälter-Sätzen zusammengefaßten Behälter radiale Hin-und Herbewegungen ausüben können.

Insgesamt gesehen erhält man durch die Erfindung ein Proben-Verteiler-System, bei dem sowohl die Primär-als auch die Sekundär-Röhrchen zentral angeordnet sind, wobei die Sekundär-Röhrchen in Sätze unterteilt sind, die für verschiedene Untersuchungen vorgesehen sind. Es handelt sich hier also um eine äußerst übersichtliche Verteilung der Röhrchen.

## Ansprüche

1. Proben-Verteiler-System zum mittels Manipulatoren, die Horizontal-und Vertikalbewegungen ausübende Pipettennadeln tragen, fernbetätigten Entnehmen bestimmter Flüssigkeitsmengen aus Primär-Behältern und Eingeben dieser in Sekundär-Behälter mit einem vorzugsweise um eine vertikale Achse drehbaren Tisch, um dessen Drehbewegungen ausübende Umfangsseite herum die zu Behälter-Sätzen zusammengefaßten und außerhalb des Tisches angeordneten Sekundär-Behälter verteilt sind, einer Waschanlage für die Pipettennadeln und einer zentralen Steuerungseinheit,
dadurch gekennzeichnet,
daß die Manipulatoren (10) vom Tisch (32) getragen und um die Achse (22) herum verteilt sind,
daß die Primär-Behälter (16) zu einem Behälter-Satz (40) zusammengefaßt und außerhalb des Tisches (32) angeordnet sind und
daß die Waschstation (30) in Drehrichtung des Tisches (32) betrachtet zwischen dem letzten Sekundär-Behälter (42) und dem Primär-Behälter-Satz (40) angeordnet ist.

2. Proben-Verteiler-System nach Anspruch 1,
dadurch gekennzeichnet,
daß der Abstand der Manipulatoren (10) von der Achse (22) gleich groß ist.

3. Proben-Verteiler-System nach Anspruch 1 oder 2,
dadurch gekennzeichnet,
daß die Pipettenrohre (14) in einer horizontalen Ebene lineare Hin-und Herbewegungen ausüben können.

4. Proben-Verteiler-System nach einem der Ansprüche 1 bis 3, dessen Manipulatoren jeweils einen vertikal ausgerichteten Träger mit einem horizontal verlaufenden Ausleger aufweisen, wobei das freie Ende des Auslegers jeweils ein Pipettenrohr trägt,
dadurch gekennzeichnet,
daß der Träger (44) auf einer rechtwinklig zum Radius des Tisches (32) verlaufenden Führung (50) hin und her bewegbar ist, während der Ausleger (46) auf dem Träger (44) vertikal hin und her bewegbar ist.

5. Proben-Verteiler-System nach einem der Ansprüche 1 bis 4, dadurch gekennzeichnet,
daß die Behälter-Sätze (28,40) in radialer Richtung des Tisches hin und her bewegbar sind.

6. Proben-Verteiler-System nach einem der Ansprüche 1 bis 5, mit mindestens einem Dilutor,
dadurch gekennzeichnet,
daß jedes Pipettenrohr (14) an jeweils einen Dilutor (56) angeschlossen ist und
daß die Dilutor (56) um die Achse (22) des Tisches (32) herum angeordnet sind.

7. Proben-Verteiler-System nach einem der Ansprüche 1 bis 6, dadurch gekennzeichnet,
daß zwischen der das Pipettenrohr (14) mit dem Dilutor (56) verbindenden Leitung (60) und dem Dilutor (56) ein Drucksensor angeordnet ist.

8. Proben-Verteiler-System nach einem der Ansprüche 1 bis 7, dadurch gekennzeichnet,
daß das Pipettenrohr (14) mit einem Schwingungsgeber und einem Schwingungsnehmer zusammenarbeitet und
daß die Steuerungseinheit einen Komparator besitzt, der die Soll-mit der Ist-Frequenz des Pipettenrohr-Endes vergleicht.

FIG.1

257

FIG.2